Europäisches Patentamt

European Patent Office    (11) Publication number:    **0 153 061**
                                                        A1
Office européen des brevets

## EUROPEAN PATENT APPLICATION

(21) Application number: **85300694.8**        (51) Int. Cl.⁴: **C 02 F 3/28**

(22) Date of filing: **01.02.85**

(30) Priority: **16.02.84  GB 8404071**

(43) Date of publication of application: **28.08.85**
Bulletin 85/35

(84) Designated Contracting States: **AT BE CH DE FR GB IT
LI LU NL SE**

(71) Applicant: **WMC RESOURCE RECOVERY LIMITED, 2,
Eaton Crescent, Clifton Bristol BS8 2EJ (GB)**

(72) Inventor: **Lawson, Victor, Flat 3, 1-2 Lansdown Place,
Clifton Bristol (GB)**
Inventor: **Toule, John Henry, 40, Bromley Heath Road,
Downend Bristol (GB)**

(74) Representative: **MacFarlane, John Anthony Christopher
et al, HASELTINE LAKE & CO. Hazlitt House 28,
Southampton Buildings Chancery Lane, London
WC2A 1AT (GB)**

(54) **Digestor tanks.**

(57) A digestor tank (1) for sewage sludge has gas circulation
pipes (4) opening low down in the tank for bubbling gas
through the sludge to agitate the sludge. Some of these pipes
are individually associated with heat exchanger jackets (3B,
3C) of heaters (3). Each gas circulation pipe (4) opens low
down in the tank and such that gas exiting from the pipe does
so in the direction towards the base (1C) of the tank and low
down in the sludge so that the sludge is scoured downwards
to impinge on the tank base to remove sedimented materials
and hence to prevent build up of such materials in the bottom
of the tank.

-1-

DIGESTOR TANKS

BACKGROUND OF THE INVENTION

This invention relates to digestor tanks in which sewage sludge is treated, micro-organisms being allowed to feed on the sewage sludge in the tank with the tank being operated at a suitable temperature and the contents of the tank being agitated to produce a uniform slurry for digestion.

DESCRIPTION OF THE PRIOR ART

In operation gas is produced that collects at the top of the tank and it is known to recirculate part of this gas back into the tank contents by means of a gas compressor and gas circulation pipes which deliver the gas to a point below the surface of the sludge in the tank, this gas then bubbling up through the sludge and thereby agitating the sludge. An example of such gas circulation equipment in a digestor tank is disclosed in British Patent Specification No. 912,433. Other examples are disclosed in British Patent Specifications Nos. 911,164; 1,023,550; 1,050,274; 1,451,398; and 1,600,979; and in United States Patent Specification No. 4,111,808.

SUMMARY OF THE INVENTION

According to the present invention there is provided a digestor tank having a plurality of gas circulation pipes and pump means for pumping gas collected at the top of the tank through the pipes to pass into sludge in the tank, the pipes opening low down in the tank so that gas existing from the pipes is released to pass through the sludge in the direction from bottom to top of the tank; the pipes opening such that gas exiting from the pipes does so in the direction towards the base of the tank and low down in the sludge so that the gas first serves to scour the sludge downwards to impinge on the tank base, the gas thereafter passing through the sludge in the direction from bottom to top.

In operation scouring downwards of the sludge to impinge on the tank base serves to remove sedimented materials and hence to prevent build-up of such materials in the bottom of the tank. Thereafter, as indicated above, the gas bubbling through the sludge in the direction from bottom to top agitates the sludge and the upward movement of gas to the top of the sludge serves to break up any concentration of light material at the upper surface.

The digestor tank is also provided with at least one heater comprising a heat exchanger disposed to be in the sludge in the tank, the (or each) heat exchanger having one (or a respective one) of the gas circulation pipes mentioned above associated with it such that gas exiting from this pipe ensures optimum agitation of the sludge in the region of the heat exchanger. By ensuring optimum sludge agitation in the region of the heat exchanger, build-up of sludge deposit on the heat exchanger in operation is minimised.

The gas circulation pipes, the (or each) heat exchanger, a sludge feed pipe and other equipment inserted into the tank from the exterior all extend into the tank from the top and so as to be withdrawable from the top. This enables any such equipment to be removed and replaced without lowering sludge level, and lengthy shutdowns can thus be avoided.

0153061

## BRIEF DESCRIPTION OF THE DRAWINGS

For a better understanding of the invention and to show how the same may be carried into effect, reference will now be made, by way of example, to the accompanying drawings, in which:-

Figure 1 is a diagrammatic sectional side view of a digestor tank,

Figure 2 is a further diagrammatic sectional side view of the tank,

Figure 3 is a plan view of the tank as shown in Figure 2,

Figure 4 is a diagrammatic sectional side view of a detail of the tank,

Figure 4A is a view, similar to Figure 4, of an alternative constructional detail,

Figure 5 is a diagrammatic sectional side view of a heater of the tank, and

Figures 6 and 7 are diagrammatic front and side views respective of another detail of the tank.

## DETAILED DESCRIPTION OF A PREFERRED EMBODIMENT

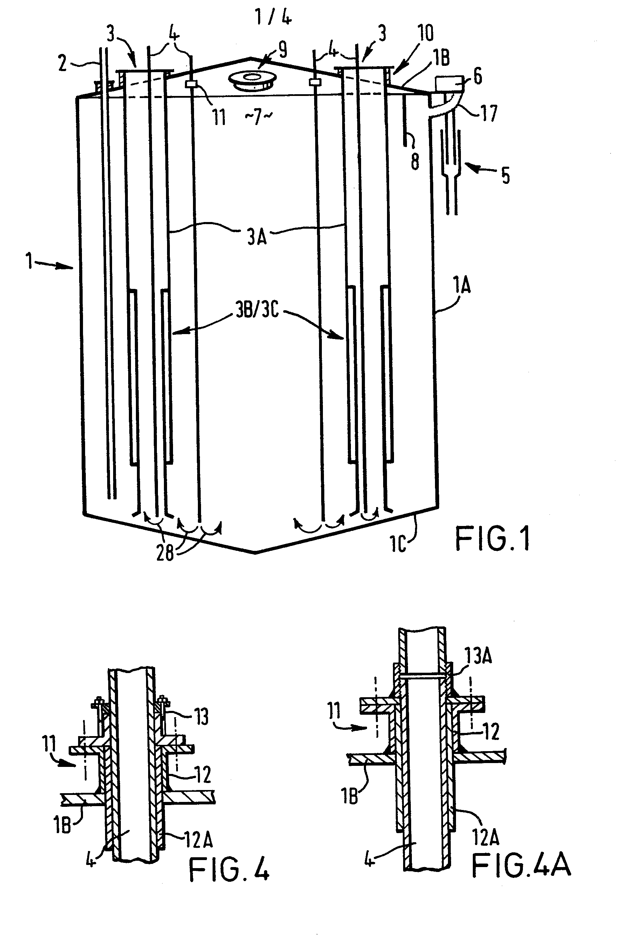

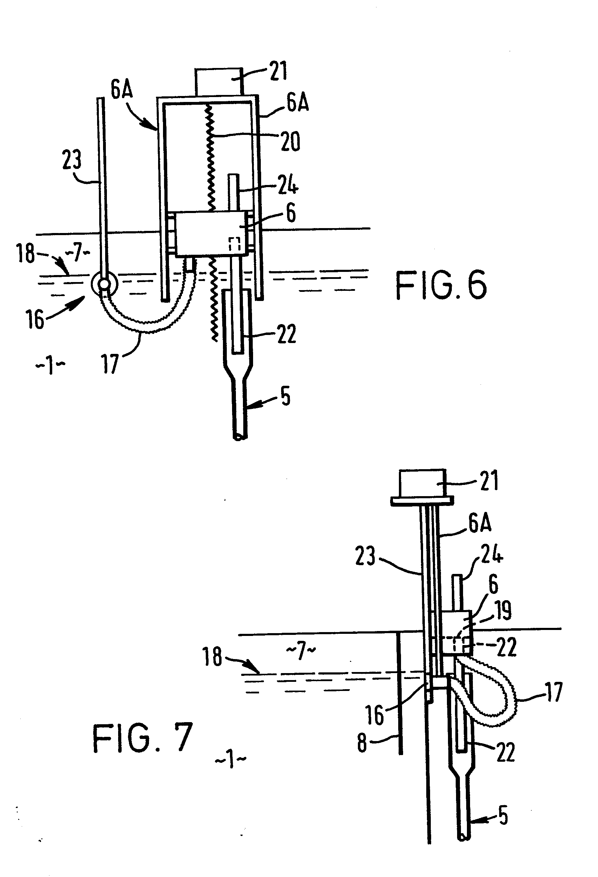

The digestor tank 1 shown in the Figures is of generally cylindrical form, having an upright side wall 1A and top and bottom walls 1B, 1C welded to the side wall 1A. Through the top wall 1A there are entered into the tank a sludge feed pipe 2, heaters 3 and gas circulation pipes 4. A slurry discharge pipe 5 extends from a discharge chamber 6 movably mounted (not shown in Figure 1 but described below with reference to Figures 6 and 7) at the top of the tank side wall 1A, this chamber 6 being separated from a gas collecting zone 7 at the top of the tank by a baffle 8 so that it is treated liquid slurry rather than gas that overflows through the discharge pipe 5. Also provided in the top wall 1A of the tank is an observation window 9.

The equipment inserted into the tank from the exterior, that is the sludge feed pipe 2, the heaters 3 and the gas circulation pipes 4, and the observation window 9, is all supported form the top wall 1B without any fastenings, for example bolt heads, protruding into the interior of the tank 1. To these ends the window 9 is clamped between flanges, and each heater 3 is suspended from a flanged stool 10. Each gas circulation pipe 4 is also supported from the flanged stool 10 (where the pipe is associated with a heater), or from its own flanged stool 11.

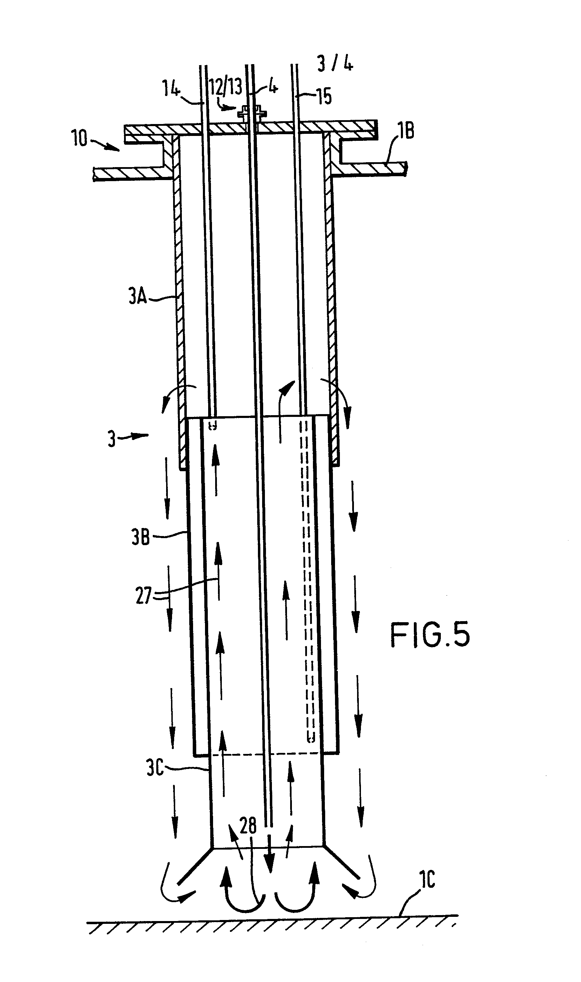

Figure 4 illustrates how each pipe 4 is supported. Figure 4 shows one of the stools 11 but similar support is provided at the stools 10. A flanged support sleeve 12 bolted onto the stool 11 carries a gas tight gland 13 through which the pipe 4 passes slidably. Below the gland 13 the pipe 4 is slidably supported in a stiffening sleeve 12A. The slidable support for the pipes 4 enables the distance at which each pipe terminates above the base 1C of the tank to be set as desired. Alternatively, if height variation is not required, each pipe 4 can be held fast, as shown in Figure 4A, in a screwed socket 13A.

Each heater 3 consists of a support framework 3A and a concentric array of cylindrical heat exchanger jackets 3B, 3C depending from the framework 3A. The framework 3A depends from the tank top wall 1B. The larger diameter jacket 3B depends from near the lower end of the framework 3A. The smaller diameter jacket 3C is supported from the jacket 3B and extends from the top of the jacket 3B to below the lower end of the jacket 3B. Within the framework 3A and array of jackets, 3B/3C there are heated water feed and return pipes 14, 15.

Also within each framework 3A and array of jackets 3B/3C there runs the gas circulation pipe that is associated with the particular heater 3. This pipe 4 is offset from the axis of the array of jackets 3B/3C.

In operation sewage sludge is supplied to the tank 1 via the feed pipe 2 to a level above the bottom of the baffle 8. Heated water is circulated through the pipes 14 and 15 to produce a desired operating temperature in the tank. Micro-organisms feed on the sewage sludge and the gas produced collects at the top of the tank.

Referring to Figures 6 and 7, the treated liquid slurry at the top of the tank 1 passes into the discharge chamber 6, which is slidably mounted in an upright framework 6A (not shown in Figure 1), via an outlet 16 and a flexible tube 17. Under the operating pressure in the tank 1 the level 18 inside the tank 1 rises to a level 19 in the discharge chamber 6. From this chamber 6 treated slurry flows down the discharge pipe 5. The level rise from level 18 to level 19 depends on the operating pressure of the digestor tank. By altering the height of the chamber 6 the level 18 in the tank can be regulated. To this end the discharge chamber height can be controlled by a screw 20 activated by a hydraulic motor 21 (not shown in Figure 1), mounted at the top of the framework 6A, to move the chamber 6 up and down on the framework 6A. To increase the level in the tank 1 the screw 20 is rotated so as to raise the discharge chamber 6 sufficiently high to cause the level 19 to drop to be within the flexible tube 17. As a result there is no discharge until the level 18 is raised in the tank by pumping more sludge in. Ultimately the level 19 rises into the discharge chamber 6 and treated slurry flows through an outlet pipe 22 that is slidably entered in the discharge pipe 5.

To lower the level 18 in the tank 1 the discharge chamber 6 is lowered by counter rotation of the screw 20 and the level 19 in the chamber 6 effectively rises so that discharge takes place until the level in the chamber 6 drops to the level of the top of the outlet pipe 22 within the chamber 6. To prevent gas locking in the flexible pipe 17 when the chamber 6 is in this low position, a vent pipe 23 is fitted to the high point of the outlet 16. Similarly to prevent syphoning action a vent pipe 24 is fitted to the discharge chamber 6. Provided that the level 18 of sludge in the tank 1 remains above the bottom of the baffle 8, the pressure of the gas that collects at the top of the tank ensures that there is always material present between the baffle 8 and the discharge chamber 6 to act as a lock against gas escape, for example through the vent pipe 23.

By the provision of the movable discharge chamber 6 there is, in effect, provided a variable height weir which facilitates operation by allowing sludge to be pumped into the digestor tank without discharge of slurry. Conversely slurry can be withdrawn when no feeding sludge is available. The construction adopted avoids any sliding seals or possible source of leakage or blockage. Operation can be from a remote panel and can be automatic.

In order to agitate the sludge in the tank gas is pumped from the top of the tank down the circulation pipes 4 by pumping equipment (not shown). This equipment can consist of an individual compressor for each pipe 4, or one, or more, compressors common to all, or common to groups, of the pipes.

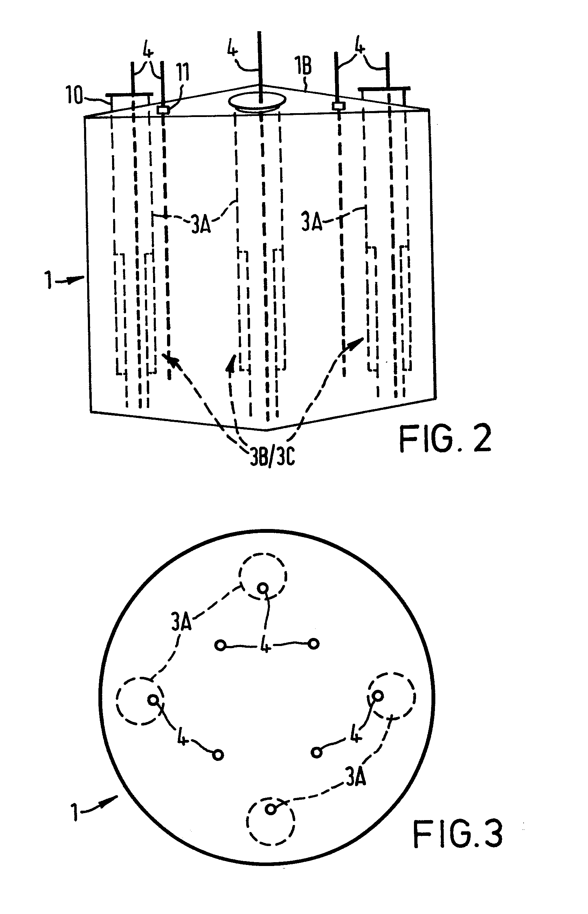

Each pipe 4 opens in the direction towards the base of the tank, and sufficiently close thereto that the gas exiting from the pipe does so in the direction towards the base of the tank and such that the sludge is scoured downwards to impinge on the tank base. Thereafter there is an upward stream of gas bubbles in the sludge, which stream carries with it some of the sludge and results in an upward movement of sludge/gas mixture and a corresponding downward movement in the surrounding bulk of the sludge. This sludge motion in the area occupied by each heater 3 is indicated by arrows 27 in Figure 5, the array of jackets 3B/3C being open at top and bottom and the framework 3A being an open framework to allow this flow to take place. The flow of gas from the pipe 4 is shown by arrows 28 in Figure 5 (and also in Figure 1). The gas circulation pipe 4 associated with each heater 3 is offset as already described (and see Figures 1, 2 and 3) to avoid obstructing a central flow of sludge within the jackets 3B, 3C. Build-up of sludge deposits on these jackets is minimised by the agitation effected in the immediate vicinity of the jackets by the gas circulation pipe 4 therewithin, the sludge flowing upwardly inside each array of jackets serving to scrub the inner surfaces, and that flowing downwardly outside serving to scrub the outer surfaces.

By the provision of the gas tight glands 13 the distance at which each gas supply pipe 4 terminates above the tank base 1C can be set (as already mentioned), for example within a range of from 100 mm to 500 mm from the base to suite sludges of from 3% to 8% solids content.

In order to enhance the overall agitation effect, the supply of gas to the individual pipes 4 is controlled by valve mechanism (not shown) so that gas is ejected from each pipe in turn. The valve mechanism can consist of individual valves, one for each pipe 4, electrically controlled to open and shut in sequence at a timing that can be selected. This sequential feed of gas gives a stirring action which is achieved, it will be noted, without utilising any moving parts within the tank. Furthermore, onset of a blockage in any one of the pipes 4 is indicated by an upward change in ejector gas pressure for that pipe 4. A blocking pipe can be taken out of operation and cleaning can be effected by rodding from the top, or in extreme cases by completely withdrawing the pipe, again from the top of the tank, without lengthy shut down of the digestor tank as a whole since the remaining pipes 4 can continue in operation. Similarly if maintenance of one of the heaters 3 becomes necessary, the heater can be withdrawn from the top.

From the above it will be appreciated that in the present tank by virtue of the absence of bolts or similar protrusions into the tank the possibility of gas or sludge leakage is minimised as all joints are made outside the tank. Moreover, all the joints are at the top of the tank so that maintenance or replacement of fittings can be carried out without shutting down the digestor for a lengthy time. Should there be a build up of solids at the bottom of the tank the components extending into the tank can be raised.

WHAT IS CLAIMED IS

1.  A digestor tank (1) having a plurality of gas circulation pipes (4) and pump means for pumping gas collected at the top of the tank through the pipes to pass into sludge in the tank, the pipes opening low down in the tank so that gas exiting from the pipes is released to pass through the sludge in the direction from bottom to top of the tank; characterised in that the pipes (4) open such that the gas exiting from the pipes does so in the direction towards the base of the tank (1) and low down in the sludge so that the gas first serves to scour the sludge downwards to impinge on the tank base, the gas thereafter passing through the sludge in the direction from bottom to top.

2.  A digestor tank as claimed in claim 1, wherein the tank is provided with at least one heater (3) comprising a heat exchanger disposed to be in the sludge in the tank, the or each heat exchanger having one or a respective one of the gas circulation pipes (4) associated with it such that gas exiting from this pipe ensures optimum agitation of the sludge in the region of the heat exchanger.

3.  A digestor tank as claimed in claim 2, wherein the heat exchanger comprises a hollow cylindrical heat exchanger jacket assembly (3B/3C) and heating means (14/15) associated with this jacket assembly, and wherein the associated gas circulation pipe (4) lies within the jacket assembly.

4.  A digestor tank as claimed in claim 3, wherein said associated gas circulation pipe (4) is offset from the axis of the jacket assembly (3B/3C).

5.  A digestor tank as claimed in any one of claims 1 to 4, wherein the or each gas circulation pipe (4) is inserted into the tank from the exterior at the top of the tank and so as to be withdrawable from the top of the tank.

6. A digestor tank as claimed in claim 2, 3 or 4, wherein the or each heat exchanger is inserted in the tank from the exterior at the top of the tank and so as to be withdrawable from the top of the tank.

7. A digestor tank as claimed in claim 5, or 6, wherein the fixtures (10/11) for the or each gas circulation pipe (4) and/or the or each heat exchanger are external of the tank.

8. A digestor tank as claimed in any one of the preceding claims, wherein each gas circulation pipe is movable up and down in the tank so that the distance at which the pipe opens above the tank base can be selected.

9. A digestor tank as claimed in any one of the preceding claims, and comprising valve means for controlling the gas flow from the pipes such that gas exits sequentially from individual pipes.

10. A digestor tank as claimed in any one of the preceding claims and comprising a discharge chamber (6) through which slurry is discharged from the tank, this chamber being movable up and down for regulating the level that can be reached by sludge in the main part of the tank.

1 / 4

FIG.1

FIG.4

FIG.4A

FIG. 2

FIG.3

0153061

FIG.5

FIG.6

FIG. 7

## EUROPEAN SEARCH REPORT

0153061

Application number

EP 85 30 0694

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-B-1 235 828 (H. ROEDIGER) <br><br> * Column 1, lines 1-6; column 2, line 13 - column 4, line 37 * | 1,2,5-7 | C 02 F 3/28 |
| X | FR-A- 874 378 (ETABLISSEMENTS BAUDOT-HARDOLL) <br> * Page 2, lines 51-63; page 3, lines 8-52; page 4, abstract points 1,3 * | 1,2,5 | |
| A | CH-A- 229 194 (VON ROLL) <br> * Page 3, claims I and II * | 3 | |
| A | FR-A-2 327 203 (R.N. WATSON et al.) <br> * Page 1, lines 4-40; page 2, line 20 - page 3, line 23 * | 1,9 | |
| A | FR-A-2 044 046 (COMPAGNIE D'ETUDES) <br> * Page 4, line 26 - page 6, line 2 * | 10 | TECHNICAL FIELDS SEARCHED (Int. Cl.4) <br><br> C 02 F |

The present search report has been drawn up for all claims

| Place of search | Date of completion of the search | Examiner |
|---|---|---|
| THE HAGUE | 15-05-1985 | TEPLY J. |